# EUROPÄISCHE PATENTANMELDUNG

(11) **EP 4 649 824 A1**
(43) Veröffentlichungstag der Anmeldung: **19.11.2025**
(21) Anmeldenummer: 25175761.3
(22) Anmeldetag: 12.05.2025
(51) Int. Cl.: A01M 21/02, A01D 34/00

(54) **VORRICHTUNG ZUR PFLEGE VON RASENFLÄCHEN**

(30) Priorität: 14.05.2024 AT 722024
(71) Anmelder: AI-Weeder GmbH, 1120 Wien (AT)
(72) Erfinder: NEUGEBAUER, Christian, 1230 Wien (AT)
(74) Vertreter: SONN Patentanwälte GmbH & Co KG

(57) **Zusammenfassung**

Bei einer Vorrichtung zur Pflege von Rasenflächen, umfassend einen Hauptkörper (3) mit einem angetriebenen Fahrwerk zur Fortbewegung auf der Rasenfläche und wenigstens ein Rasenbearbeitungsmodul (1), welches ein motorisch zur Rasenfläche absenkbares Werkzeug (11) aufweist, ist das Rasenbearbeitungsmodul (1) relativ zum Hauptkörper (3) quer zur Fahrtrichtung (13) verlagerbar, insbesondere verschwenkbar, um das Werkzeug (11) zwischen einer rechten und einer linken Bearbeitungsposition zu verlagern bzw. zu verschwenken, wobei ein auf die Rasenfläche ausrichtbarer Sensor (14) und eine Steuervorrichtung vorgesehen sind, wobei vom Sensor (14) erfasste Sensordaten einem in der Steuervorrichtung implementierten Algorithmus zur Durchführung einer Objekterkennung zugeführt sind, sodass die Steuervorrichtung das Werkzeug (11) bei Erkennen eines Objekts absenkt, um einen Arbeitsschritt am Objekt durchzuführen.

## Beschreibung

Die Erfindung betrifft eine Vorrichtung zur Pflege von Rasenflächen, umfassend einen Hauptkörper mit einem angetriebenen Fahrwerk zur Fortbewegung auf der Rasenfläche und wenigstens ein Rasenbearbeitungsmodul, welches ein motorisch zur Rasenfläche absenkbares Werkzeug aufweist.

Bekannte Mähroboter werden zur automatisierten Pflege von Rasenflächen eingesetzt. Sie umfassen üblicherweise rotierende Mähmesser zum Abschneiden des Rasens auf eine vorgegebene Höhe. Zur Unkrautentfernung sind derartige Mähroboter jedoch nicht geeignet. Stattdessen werden zur selektiven Unkrautentfernung üblicherweise manuelle Geräte verwendet, bei denen das Unkraut mittels einer gezielten mechanischen Bearbeitung, durch Abflammen oder durch Ausbringen von Herbiziden entfernt wird.

Große Rasenflächen, wie beispielsweise Golfplätze oder Fußballplätze, werden mittels regelmäßiger Unkrautvertilgung unkrautfrei gehalten.

Nachteilig an chemischen Verfahren zur Unkrautvertilgung sind die Kontamination des Bodens, die Schädigung von Bodenorganismen und Insekten und die mögliche Kontamination von Grundwasser. Nachteilig ist weiters die Emission von Kohlendioxid und Prozess-Schadstoffen, die bei der Produktion und Distribution der chemischen Unkrautvertilger verursacht wird.

Aus den Schriften CN 109511356 A, CN 109769419 A, US 20060213167 A1 und AT 525644 B1 sind robotische Verfahren bekannt, bei denen ein auf einem mobilen Roboter angebrachtes Werkzeug Unkraut mechanisch entfernt. Nachteilig an den bekannten robotischen Verfahren ist, dass für den Unkrautentfernungsvorgang der mobile Roboter seine Fahrt unterbricht, das Unkraut entfernt, und erst danach seine Fahrt wieder fortsetzt. Diese Haltevorgänge reduzieren die Flächenleistung und damit die mögliche zu bearbeitende Fläche pro Zeiteinheit derartiger Geräte. Nachteilig an bekannten robotischen Geräten ist weiters, dass sie mit nur einem einzigen Werkzeug versehen sind und kein gleichzeitiges Entfernen mehrerer Unkräuter ermöglichen. Diese Nachteile führen zu geringer Flächenleistung derartiger Roboter.

Der vorliegenden Erfindung liegt daher die Aufgabe zugrunde, eine Vorrichtung zur automatischen Unkrautentfernung bereitzustellen, die eine hohe Flächenleistung, geringe Umweltbelastung und einen effizienten, zuverlässigen und kostengünstigen Betrieb ermöglicht.

Zur Lösung dieser Aufgabe ist die Vorrichtung der eingangs genannten Art dadurch gekennzeichnet, dass das Rasenbearbeitungsmodul relativ zum Hauptkörper quer zur Fahrtrichtung verlagerbar ist, insbesondere verschwenkbar ist, um das Werkzeug zwischen einer rechten und einer linken Bearbeitungsposition zu verlagern bzw. zu verschwenken, dass bevorzugt das Rasenbearbeitungsmodul in Höhenrichtung relativ zum Hauptkörper verlagerbar am Hauptkörper angeordnet ist und dass ein auf die Rasenfläche ausrichtbarer Sensor und eine Steuervorrichtung vorgesehen sind, wobei vom Sensor erfasste Sensordaten einem in der Steuervorrichtung implementierten Algorithmus zur Durchführung einer Objekterkennung zugeführt sind, sodass die Steuervorrichtung das Werkzeug bei Erkennen eines Objekts, insbesondere von Unkraut, absenkt, um einen Arbeitsschritt am Objekt durchzuführen.

Die Erfindung ermöglich eine punktuelle Rasenbearbeitung, wie z.B. eine Unkrautentfernung, durch ein absenkbares Bearbeitungswerkzeug während kontinuierlicher Fortbewegung der Vorrichtung. Hierzu ist es erforderlich, dass das Werkzeug während der Fahrt so abgesenkt wird, dass es sich zum richtigen Zeitpunkt in einer abgesenkten Arbeitsposition relativ zum erkannten Objekt, wie z.B. einem Unkraut, befindet, um einen Arbeitsschritt am Objekt, wie z.B. ein Entfernen von Unkraut, durchzuführen.

Die Steuervorrichtung aktiviert hierbei basierend auf den Sensordaten des wenigstens einen Sensors und einem Algorithmus zur Durchführung einer Objekterkennung einen Hubantrieb des Sensors derart, dass das Werkzeug zeitlich gesteuert bevorzugt so abgesenkt und wieder angehoben wird, dass sich der tiefste Punkt dieses Bewegungsablaufes an der Stelle des Unkrauts befindet, und so das Unkraut bodennah, knapp über seiner Wurzel entfernt, wie z.B. abgeschnitten wird.

Der von einem einzelnen Rasenbearbeitungsmodul erfassbare Arbeitsbereich wird dadurch erhöht, dass das wenigstens eine Rasenbearbeitungsmodul relativ zum Hauptkörper quer zur Fahrtrichtung verlagerbar ist, insbesondere verschwenkbar, ist, um das Werkzeug zwischen einer rechten und einer linken Bearbeitungsposition zu verlagern bzw. zu verschwenken. Insbesondere ist dadurch eine beliebige Bearbeitungsposition zwischen der rechten und der linken Bearbeitungsposition einstellbar, sodass Unkraut an jeder beliebigen Position innerhalb der Bearbeitungsbreite entfernt werden kann.

Eine bevorzugte Ausbildung sieht hierbei vor, dass das wenigstens eine Rasenbearbeitungsmodul einen Rollkörper zum Abrollen auf der Rasenfläche aufweist.

Um die Wegstrecke der Absenkung des Werkzeuges und damit die erforderliche lotrechte Beschleunigung des Werkzeugs zur Erreichung des Zieles in der erforderlichen Zeit zu minimieren, ist eine Führung des Werkzeugs in konstantem, kleinem, die Wuchshöhe der Nutzpflanzen lediglich minimal überschreitendem Abstand vom Boden erforderlich. Erfindungsgemäß wird diese Aufgabe durch mit dem Rasenbearbeitungsmodul in lotrechter Richtung abgestützter Rollkörper gelöst. Diese halten die Höhe des Rasenbearbeitungsmoduls relativ zum Boden konstant und ermöglichen eine Erreichung des Zieles des Werkzeugs in vertikaler Richtung innerhalb der erforderlichen kurzen Zeitspanne.

Durch das kontinuierliche Abrollen des Rollkörpers, wie z.B. eines Laufrades, wird somit ein konstanter und geringer Abstand zwischen dem Boden und dem Werkzeug in dessen angehobenem Zustand sichergestellt. Dadurch muss der Hubantrieb das Rasenbearbeitungswerkzeug nur um einen vordefinierten und wiederholbaren Weg verlagern, um eine effektive Bearbeitung, bzw. Unkrautentfernung zu erzielen. Dies ermöglicht eine schnelle Bearbeitung mit kurzer Bearbeitungsdauer. Zudem werden durch den definierten und auf Grund des Abrollens auf der Rasenfläche konstant gehaltenen Abstand des Rasenbearbeitungsmoduls von der Rasenfläche eine deterministische Vorlaufzeit zur Ansteuerung des Hubantriebs und eine deterministische Bearbeitungsdauer erreicht. Bei konstanter Fahrgeschwindigkeit der Vorrichtung kann somit der Bearbeitungsvorgang durch die Steuereinrichtung jeweils bei einer konstanten Distanz zum angezielten Unkraut eingeleitet werden.

Eine Eigenschaft von abrollenden Rädern ist die Aufbringung von Seitenführungskräften in dem Fall, in dem die Bewegungsrichtung des Aufstandspunktes des Rades relativ zum Boden nicht mit der Abrollrichtung des Rades rechtwinkelig zur Radachse übereinstimmt. Um Seitenführungskräfte und damit eine Abweichung von der vorgegebenen Fahrtrichtung zu verhindern, muss die Bewegungsrichtung des Radaufstandspunktes relativ zum Boden mit der Abrollrichtung des Rades möglichst übereinstimmen.

Bei Stützrädern an landwirtschaftlichen Maschinen wird das dadurch erreicht, dass die Fahrbahnen weitgehend gerade ausgerichtet sind und die Arbeitsmittel beim Wenden angehoben werden. Zum Zweck der Unkrautvertilgung auf Rasenflächen wie beispielsweise Golfplätzen ist eine Einschränkung auf gerade Fahrbahnen jedoch nicht erwünscht, sondern es muss auch der kontinuierliche Betrieb entlang gekurvter Fahrbahnen möglich sein. Um für die Anwendung auf Rasenflächen Seitenführungskräfte auf gekurvten Fahrbahnen zu verhindern, muss die Abrollrichtung des Rades daher auf die Bewegungsrichtung des Radaufstandspunktes relativ zum Boden ausgerichtet werden.

Zur Ausrichtung der Abrollrichtung eines Rades in Bewegungsrichtung gebräuchlich ist die Anordnung des Rades mit Nachlauf, sodass das aus der Seitenkraft und der Nachlaufstrecke resultierende Drehmoment um die lotrechte Achse das Rad in die Bewegungsrichtung dreht. Nachteilig an Rädern, die mit Nachlauf versehen sind, ist deren Platzbedarf, der durch einen Volltorus aus dem Raddurchmessers mit dem Rotationsachsenradius der Nachlaufstrecke beschrieben wird. Das Mindestmaß des Raddurchmessers bei der vorliegenden Erfindung ergibt sich aus der Bedingung, Bodenunebenheiten überrollen zu können, mit etwa 120 mm. Mit einer Nachlaufstrecke, die um wirksam zu sein mindestens 50 mm beträgt, ergibt sich ein Raumbedarf von 220 mm Durchmesser. Um eine ausreichende Anzahl von Werkzeugen am Hauptkörper der erfindungsgemäßen Vorrichtung auch bei höherem Unkrautbewuchs anordnen zu können und um die maximale Wegstrecke zur Querverschiebung und damit die erforderliche Winkelbeschleunigung des Bearbeitungsmoduls zur Erreichung des Zieles in der erforderlichen Zeit von etwa 0,3 Sekunden sicherzustellen, hat sich eine Modulteilung, das heißt ein seitlicher Abstand zwischen zwei benachbarten Rasenbearbeitungsmodulen am Hauptkörper von nicht mehr als 150 mm als erforderlich herausgestellt. Somit wäre eine einreihige Modulanordnung mit Rollkörpern mit Nachlauf nicht möglich, sondern eine zumindest zweireihige Anordnung der Rasenmodule in Fahrtrichtung hintereinander nötig, um Kollisionen der Rollkörper mit Nachlauf zu verhindern. Nachteilig an einer solchen zweireihigen Anordnung wären jedoch die Baugröße, das Gewicht, und der damit verbundene höhere Energieverbrauch zum Antrieb, sowie die damit verbundenen Kosten.

Alternativ könnten die erforderlichen Bewegungsrichtungen des Rollkörpers oder der Rollkörper aus den Winkelgeschwindigkeiten der Antriebsräder und ihrer geometrischen Lage am Gerät rechnerisch ermittelt, und die Rollkörper motorisch in die korrekte Abrollrichtung gedreht werden. Nachteilig an einer solchen motorischen Ausrichtung der Rollkörper wären jedoch ebenfalls Baugröße, Gewicht und Kosten solcher Antriebe.

Um ein Abrollen der Rollkörper in Bewegungsrichtung ihrer Radaufstandspunkte auf kompakte, massenarme und kostengünstige Weise zu erzielen, ist es gemäß einer bevorzugten Ausführungsform der vorliegenden Erfindung vorgesehen, dass der Rollkörper mit seinem Rollkörperaufstandspunkt entlang einer Geraden angeordnet ist, die die Aufstandspunkte zweier ungelenkter Räder des Fahrwerks verbindet. Auf diese Weise liegt der Aufstandspunkt eines jeden Rollkörpers entlang der Achse des gesamten Fahrwerks und es treten daher keine nennenswerten seitlich gerichteten Kräfte auf, wenn das Fahrwerk eine Drehbewegung ausführt, um die erfindungsgemäße Vorrichtung entsprechend zu manövrieren.

Gemäß einer bevorzugten Ausführungsform der vorliegenden Erfindung wird eine weitere Minimierung von seitlich gerichteten Kräften am Rasenbearbeitungsmodul dadurch erreicht, dass der Rollkörperaufstandspunkt in einer Verschwenkachse angeordnet ist, um die das Rasenbearbeitungsmodul zwischen der rechten und der linken Bearbeitungsposition verlagerbar bzw. verschwenkbar ist. Auf diese Weise treten auch beim Verschwenken des Rasenbearbeitungsmoduls in der seitlichen Richtung keine nennenswerten Kräfte auf, die das Modul aber auch den Rasen beschädigen könnten.

Die genannten ungelenkten Räder können als Antriebsräder ausgeführt sein und die Manövrierbarkeit des Fahrwerks und somit der gesamten Vorrichtung wird durch Differentialantrieb der ungelenkten Antriebsräder erzielt. Das Kippmoment des Mobilroboters kann durch eine als Lenkrolle mit Nachlauf ausgeführte Abstützung kompensiert werden. Alternativ kann das Kippmoment der erfindungsgemäßen Vorrichtung zur Pflege von Rasenflächen durch ein weiteres angetriebenes, gelenktes Rad oder Radpaar kompensiert werden.

Die Wegstrecke der Absenkung des Werkzeuges und damit die erforderliche lotrechte Beschleunigung des Werkzeugs zur Erreichung des Zieles wird mittels des am Boden rollenden Rollkörpers auch bei unebenem Gelände kleinstmöglich und konstant gehalten.

Um die Aufstandskraft des Rollkörpers am Boden und damit dessen Rollwiderstand zu reduzieren, kann bevorzugt vorgesehen sein, dass das wenigstens eine Bearbeitungsmodul mittels wenigstens einer Feder, bevorzugt mit einstellbarer Vorspannung, vertikal am Hauptkörper abgestützt ist. Die lotrechte Kraftkomponente bestimmt neben der Begrenzung der Seitenführungskraft auch das Eindrücken des Rasenbearbeitungsmodul in den Rasen und somit die Werkzeughöhe relativ zum Boden, und bei Anbringung eines Rollkörpers am Rasenbearbeitungsmodul, an dem auch das Werkzeug angebracht ist, die erzielbare Vertikalkraft des Werkzeugs auf den Rasen, die das Eindringen des Werkzeugs in den Rasen bewirkt. Zur Minimierung der Seitenführungskraft ist eine geringe Federkraft gewünscht, zum besseren Eindringen des Werkzeugs im Rasen ist hingegen eine hohe Federkraft gewünscht. Bevorzugt ist daher das Bearbeitungsmodul mit einstellbarer Vorspannung der Feder vertikal am Hauptkörper abgestützt. Diese Einstellbarkeit erlaubt die Anpassung der Federkraft und insbesondere das damit beeinflusste Eindringen des Werkzeugs in den Rasen an den Rasenzustand. Beispielsweise kann die Einstellbarkeit der Vorspannung der Feder durch mehrere in der Höhenrichtung beabstandete Festlegungspunkte für ein Ende der Feder erreicht werden, sodass durch Auswahl einer geeigneten Festlegungshöhe zumindest eines der Enden der Feder eine entsprechende Vorspannung der Feder erzielt wird.

Bevorzugt kann die erfindungsgemäße Vorrichtung eine Mehrzahl von Rasenbearbeitungsmodulen aufweisen, die nebeneinander angeordnet sind, wodurch die Bearbeitungsbreite und damit die Flächenleistung der Vorrichtung erhöht werden. Der modulare Aufbau erlaubt zudem eine Anpassung der Vorrichtung an eine vorgegebene Flächenleistung und somit eine einfache Skalierbarkeit des Konzepts.

Bevorzugt sind zwei benachbarte Rasenbearbeitungsmodule jeweils in einem seitlichen Abstand voneinander angeordnet, der gleich oder kleiner ist als eine durch die rechte und die linke Bearbeitungsposition definierte Bearbeitungsbreite des Rasenbearbeitungsmoduls. Damit gelingt eine ununterbrochene Bearbeitbarkeit über die gesamte Breite der eingesetzten Module, unabhängig von deren Anzahl.

Die beim Verschwenken mehrerer benachbarter Module möglichen Kollisionen zwischen den einzelnen Modulen können von der Steuervorrichtung dadurch vermieden werden, dass die Steuerung rechtwinkelig zur Fahrtrichtung Mindestabstände zu den Schwenkpositionen der jeweils benachbarten Module einhält. Darüber hinaus verhindern bevorzugt beidseitige Gleitflächen an den Modulen Beschädigungen und Verhaken der Module in einem solchen Kollisionsfall.

Die Steuervorrichtung ist vorzugsweise ausgebildet, um den Antrieb zur seitlichen Verlagerung bzw. Verschwenkung des wenigstens einen Rasenbearbeitungsmoduls derart anzusteuern, dass das Werkzeug über ein innerhalb der Bearbeitungsbreite erkanntes Objekt gelangt.

Dies gelingt steuerungstechnisch gemäß einer bevorzugte Ausbildung dadurch, dass die Steuervorrichtung ausgebildet ist, um einen senkrecht zur Fahrtrichtung gemessenen seitlichen Abstand zwischen einem erkannten Objekt und dem Rasenbearbeitungsmodul oder dem Werkzeug zu erfassen und den Antrieb zur seitlichen Verlagerung bzw. Verschwenkung des wenigstens einen Rasenbearbeitungsmoduls während der Fahrt in einem Closed-Loop-Verfahren derart anzusteuern, dass der Abstand verringert bzw. auf Null reduziert wird.

Die Höhenverlagerbarkeit des wenigstens einen Rasenbearbeitungsmoduls relativ zum Hauptkörper und dessen seitliche Verlagerbarkeit bzw. Verschwenkbarkeit können in konstruktiv besonders einfacher Weise dadurch realisiert werden, dass das bzw. jedes Rasenbearbeitungsmodul jeweils über ein Drehschubgelenk mit dem Hauptkörper verbunden ist. Es wird hierdurch der rotatorische Freiheitsgrad zur Verschwenkbarkeit des Bearbeitungsmoduls mit dem translatorischen Freiheitsgrad zur lotrechten Beweglichkeit des Bearbeitungsmoduls kombiniert. Somit werden beide Freiheitsgrade mit einer einfachen, massenarmen und kostengünstigen Bauweise erzielt.

Bevorzugt ist der Rollkörper mit seinem Aufstandspunkt in der Drehachse des Drehschubgelenks am Hauptkörper angeordnet. Durch die Anordnung werden Störmomente auf den Verschwenkantrieb des Bearbeitungsmoduls beim Auftreten von Seitenführungskräften, die sich aus Seitenführungskräften und deren Normalabstände zur Drehachse ergeben, verhindert. Bevorzugt ist das wenigstens eine Rasenbearbeitungsmodul zu seiner Verlagerung bzw. Verschwenkung von einem am Hauptkörper angeordneten Antrieb angetrieben. Der Antrieb ist vorzugsweise als Elektromotor ausgebildet und gibt damit im Betrieb keine Chemikalien ab und erzeugt keinen übergebührlichen Lärm.

Der Antrieb kann vorzugsweise über ein Kurbelgetriebe und eine Schubstange mit dem Rasenbearbeitungsmodul zusammenwirken. Die Drehachsen des Kurbelgetriebes können hierbei horizontal verlaufen, wodurch ein gravitationsbedingtes Absinken der Schmierstoffe vermieden und damit hohe Lebensdauer des Antriebs erzielt wird.

Der Kurbeltrieb ist in vorteilhafter Weise derart ausgebildet, dass er sich in seinen Ruhestellungen in einem jeweiligen Totpunkt befindet, sodass zum elektrischen Halten in den Ruhepositionen wenig Energie erforderlich ist und so eine hohe Akkulaufzeit der erfindungsgemäßen Vorrichtung möglich ist.

In einer Neutralposition der Rasenbearbeitungsmodule richtet der Verschwenkantrieb das Bearbeitungsmodul so aus, dass die Achse des jeweiligen Rollkörpers parallel zu den Achsen der nicht gelenkten Räder ausgerichtet ist, sodass das Abrollen des Rollkörpers in die Richtung der Bewegung seines Radaufstandspunktes relativ zum Boden erzielt wird, wodurch das Auftreten von Seitenführungskräften minimiert wird, wie dies weiter oben bereits beschrieben ist.

Wird eine Unkrautpflanze erkannt, und das Werkzeug mit dem Verschwenkantrieb zur Unkrautpflanze bewegt, wird das Rasenbearbeitungsmodul und der damit verbundene Rollkörper um die lotrechte Achse verlagert bzw. verschwenkt und es entsteht eine Seitenführungskraft in dem Zeitraum, in dem das Bearbeitungsmodul ausgeschwenkt ist.

Durch die erfindungsgemäße Anordnung der Aufstandspunkte der Rollkörper entlang der Linie der Radaufstandspunkte zweier ungelenkter Räder der erfindungsgemäßen Vorrichtung zur Pflege von Rasenflächen entstehen zwar aus der quer zur Fahrtrichtung wirkenden Komponente einer solchen Seitenführungskraft keine Lenkmomente, allerdings entstehen Zwangskräfte gegenüber dem Hauptkörper, die diesen mechanisch belasten und die Reaktionskräfte am Rasen bewirken, was wiederum zur Beschädigung der Rasenpflanzen führen kann.

Um diesen Effekt zu minimieren, ist die Erfindung bevorzugt dahingehend weitergebildet, dass das Rasenbearbeitungsmodul in Verlagerungs- bzw. Schwenkrichtung gefedert mit dem Antrieb verbunden ist, wobei ein Federelement vorzugsweise zwischen dem Rasenbearbeitungsmodul und der Schubstange angeordnet ist. Die federnde Ankoppelung des Moduls an den Motor, das Kurbelgetriebe und die Schubstange minimiert darüber hinaus von Kollisionen mit Hindernissen herrührende Stoßbeanspruchungen auf den Motor und das Getriebe und erzielt damit eine hohe Robustheit und Zuverlässigkeit der Vorrichtung.

Um Beschädigungen von Rasenpflanzen zusätzlich entgegenzuwirken, ist gemäß einer bevorzugten Ausführungsform der vorliegenden Erfindung vorgesehen, dass der Rollkörper quer zu seiner Abrollrichtung mit einem verrundeten Querschnitt ausgebildet. Dies bedeutet im Falle eines einfachen Rades als Rollkörper, dass die Flanken des Reifens verrundet ausgebildet sind. Auf diese Weise wird ein möglichst sanftes Abgleiten des Rollkörpers am Rasen ermöglicht, sollte es doch zu seitlich wirkenden Kräften am Rollkörper kommen.

Bevorzugt kann vorgesehen sein, dass das Werkzeug mittels einer Parallelogrammführung am Rasenbearbeitungsmodul gelagert ist. Die Parallelogrammführung bewegt das Werkzeug ohne die Werkzeugachse zu verkippen, sodass Präzessionsmomente von schnell drehenden Werkzeugen nicht zu Lagerbelastung, höherem Energieverbrauch, und unerwünschten Bewegungen führen.

Die Parallelogrammführung ist vorzugsweise ausgebildet, um das Werkzeug entlang einer Trajektorie von einer Parkposition in eine Bearbeitungsposition zu bewegen, die relativ zum Rasenbearbeitungsmodul nach unten und in Fahrtrichtung verläuft. In umgekehrter Richtung verläuft die Trajektorie des Werkzeugs relativ zur Vorrichtung von der Bearbeitungsposition in die Parkposition entlang einer Bahn eines Kreisbogens nach oben und gegen die Fahrtrichtung, was bewirkt, dass bei Kollisionen mit dem Boden oder mit am Boden befindlichen Gegenständen das Werkzeug bei kontinuierlicher Fortbewegung der Vorrichtung nach oben abhebt, um so Schäden am Hubantrieb des Werkzeugs zu vermeiden und eine hohe Robustheit und Zuverlässigkeit der Vorrichtung zu erzielen.

Der Hubantrieb des Werkzeugs ist bevorzugt zur Ausführung eines vorgegebenen Hubs zwischen einer vorgegebenen Parkposition und einer vorgegebenen Bearbeitungsposition ausgebildet. Der vorgegebene Hub stellt sicher, dass die Verstellung von der Parkposition in die Bearbeitungsposition bei bekannter Geschwindigkeit des Hubantriebs eine vorbestimmte Zeitspanne dauert, was eine Einleitung des Absenkvorgangs bei Erreichen einer vorgegebenen Distanz zum angezielten Unkraut erlaubt.

Der Hubantrieb kann vorzugsweise von einem Elektromotor gebildet sein. Der Hubantrieb kann über einen Kurbeltrieb und eine Schubstange an das Werkzeug angekoppelt sein. Der Kurbeltrieb kann hierbei derart ausgebildet sein, dass er sich in den Ruhestellungen in seinen Totpunkten befindet, sodass zum elektrischen Halten in den Ruhepositionen wenig Energie erforderlich und so hohe Akkulaufzeit der Vorrichtung möglich ist.

Der Kurbeltrieb zum Absenken des Werkzeugs ist vorzugsweise derart ausgebildet, dass er beim Erreichen des tiefsten Arbeitspunkts, d.h. der Bearbeitungsposition, seinen Totpunkt durchläuft, sodass die Vertikalkraft in diesem Arbeitspunkt ihr Maximum erreicht. Der Kurbeltrieb zum Absenken des Werkzeugs bewirkt eine Absenkgeschwindigkeit, die etwa einer Sinus-Funktion seines Kurbelwinkels entspricht, sodass das Getriebe seine höchste absolute Absenkgeschwindigkeit im halben Hub, und seine geringste absolute Absenkgeschwindigkeit in den Umkehrpunkten erzielt. Der Bereich der Ziel-Arbeitshöhe wird somit schnell erreicht und lange gehalten. Damit wird der unerwünschte Abtrag von Rasen in Fahrtrichtung vor und hinter dem Unkraut minimiert.

Die vorteilhafte horizontale Anordnung der Getriebe für das Kurbelgetriebe vermeidet gravitationsbedingtes Absinken der Schmierstoffe und erzielt damit eine hohe Lebensdauer des Antriebs.

Eine weitere bevorzugte Ausbildung sieht vor, dass ein am Rasenbearbeitungsmodul befestigter Hubantrieb in Hubrichtung gefedert mit dem Werkzeug verbunden ist. Die federnde Verbindung zwischen dem Hubantrieb bzw. dem Hubkurbeltrieb und dem Werkzeug minimiert von Kollisionen mit Hindernissen herrührende Stoßbeanspruchungen auf den Hubantrieb und das Getriebe und erzielt damit hohe Robustheit und Zuverlässigkeit der Vorrichtung.

Das wenigstens eine Werkzeug kann beispielsweise zum Entfernen von Unkraut und/oder zum Aufsammeln eines aufzusammelnden Objekts, wie z.B. Zapfen, Nadeln, Laub oder Abfällen, auf der von der Vorrichtung befahrenen Rasenfläche ausgebildet sein. Bevorzugt ist das Werkzeug jedoch als Jätvorrichtung zur Entfernung von Unkraut beziehungsweise als Schneidvorrichtung zum bodennahen Abschneiden von Unkraut ausgebildet.

Die Jätvorrichtung beziehungsweise Schneidvorrichtung kann eine oder mehrere rotierende Klingen oder einen rotierenden Schneidfaden aufweisen.

Sobald durch die Objekterkennung im Erfassungsbereich des Sensors Unkraut erkannt wird, veranlasst die Steuervorrichtung, dass sich der geometrische Kontaktpunkt der Jätvorrichtung während kontinuierlicher Fahrt zum Unkraut absenkt und das Werkzeug dort aktiviert wird, um das Unkraut von seiner Wurzel abzutrennen. Obwohl ein Großteil der Wurzel im Boden verbleibt, ist der weitere Wuchs und damit auch die Vermehrung des Unkrauts gestoppt. Nach einigen solchen Abtrennvorgängen treibt die Wurzel nicht wieder aus und verrottet ohne weitere Eingriffe im Boden.

Bevorzugt ist die Mehrzahl der Rasenbearbeitungsmodule unabhängig voneinander in Höhenrichtung relativ zum Hauptkörper und quer zur Fahrtrichtung verlagerbar bzw. verschwenkbar, sodass die Module auch bei Bodenunebenheiten unabhängig voneinander mit ihren Laufrollen am Boden entlanglaufen und somit den vorgesehenen Bodenabstand einhalten.

Der optische Sensor ist vorzugsweise als digitale Kamera ausgebildet, dessen digitale Bilddaten in Echtzeit der Steuervorrichtung zugeführt werden, in welcher ein Algorithmus zur Durchführung einer Objekterkennung die Daten verarbeitet.

Der Erfassungsbereich des Sensors, insbesondere der digitalen Kamera, umfasst hierbei bevorzugt die summierte Bearbeitungsbreite aller Rasenbearbeitungsmodule, sodass mit einem einzigen Sensor das Auslangen gefunden werden kann.

Um eine voneinander gesonderte Ansteuerung der einzelnen Bearbeitungsmodule zu erleichtern, wird bereits bei der Datenverarbeitung eine Zuordnung der Bilddaten zu den einzelnen Modulen vorgenommen. Hierbei ist bevorzugt vorgesehen, dass das digitale Bewegtbild der digitalen Kamera in der Steuervorrichtung in mehrere in Fahrtrichtung verlaufende parallele Bearbeitungsbereiche unterteilt ist, die jeweils der Bearbeitungsbreite eines Rasenbearbeitungsmoduls zugeordnet sind.

Das Fahrwerk der erfindungsgemäßen Vorrichtung kann grundsätzlich beliebig ausgeführt sein, wie z.B. als Raupenfahrwerk oder als radbasiertes Fahrwerk mit wenigstens zwei Rädern. Im Falle eines Fahrwerks mit nur zwei Rädern kann der Rollkörper des Bearbeitungsmoduls oder können die Rollkörper der Mehrzahl von Bearbeitungsmodulen einen dritten Abstützpunkt der Vorrichtung ausbilden. Alternativ kann das radbasierte Fahrwerk zumindest drei Räder aufweisen, von denen vorzugsweise wenigstens eines als lenkbares Rad ausgebildet ist.

Insbesondere ist die Vorrichtung zur autonomen Navigation und vorzugsweise als mobiler Roboter ausgebildet, der große Rasenflächen selbständig in einem vorgegebenen oder selbstgewählten Muster abfahren kann. Der Antrieb des Fahrwerks kann zum Beispiel einen Elektromotor umfassen.

Durch die Erfindung wird eine roboterartige Vorrichtung zum Unkrautentfernen ermöglicht, die eine Reihe von Vorteilen mit sich bringt:
- Die Vorrichtung erlaubt eine Unkrautentfernung während der kontinuierlichen Fortbewegung. Bei einer Fahrgeschwindigkeit von beispielsweise 500 mm/sec dauert der Unkrautentfernungsvorgang vorzugsweise weniger als 100 msec.
- Zur Erhöhung der Flächenleistung des Roboters können mehrere Rasenbearbeitungsmodule nebeneinander angeordnet werden, wobei die Arbeitsbreiten der einzelnen Module einander überlappen können.
- Es gelingt ein deterministischer, zeitlich vorhersagbarer Unkrautentfernungsvorgang, um den Start des Vorgangs mittels der Steuerung zu einem Zeitpunkt, der vor der Überfahrt des Unkrauts liegt, zu ermöglichen, sodass der Arbeitspunkt der Vorrichtung zu jenem Zeitpunkt erreicht ist, an dem sich das Werkzeug an der Stelle des Unkrauts befindet.
- Die Führung des Werkzeugs erfolgt ohne Achsverkippung, sodass von schnell drehenden Werkzeugen herrührende Präzessionsmomente nicht zu Lagerbelastung, höherem Energieverbrauch, oder unerwünschten Bewegungen führen.
- Geringer Energieverbrauch, um eine hohe Akkulaufzeit des Mobilroboters zur ermöglichen.
- Geringer Abtrag von Rasen an Stellen, auf denen kein Unkraut vorliegt.
- Keine Abgabe von Chemikalien beim Betrieb ("Grüne Technologie").
- Keine Erzeugung von Lärm.
- Hohe Lebensdauer.
- Robuste, zuverlässige Funktion.
- Sichere Funktion.
- Geringe Herstellkosten.

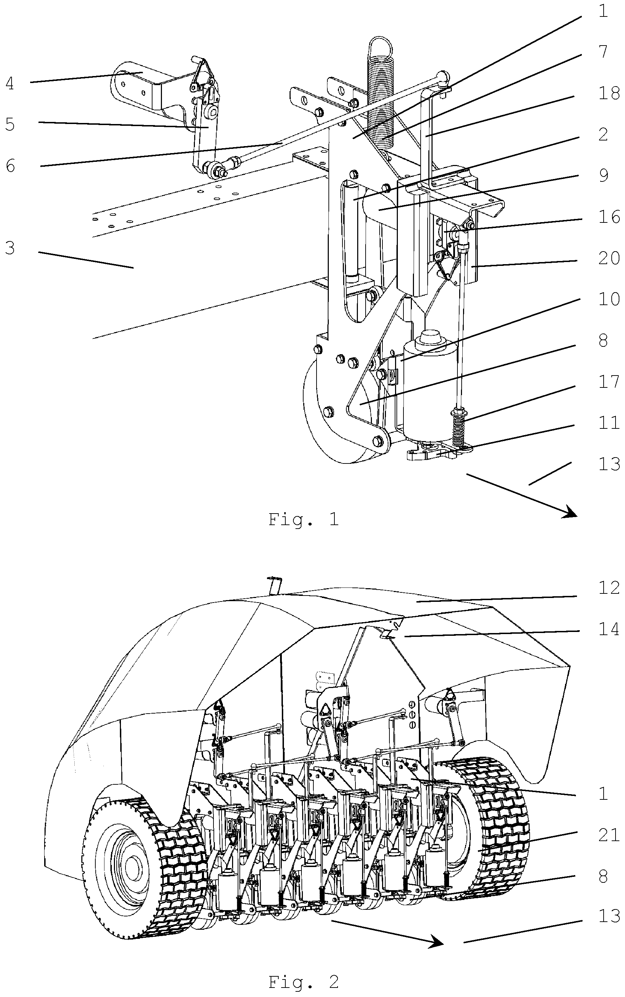

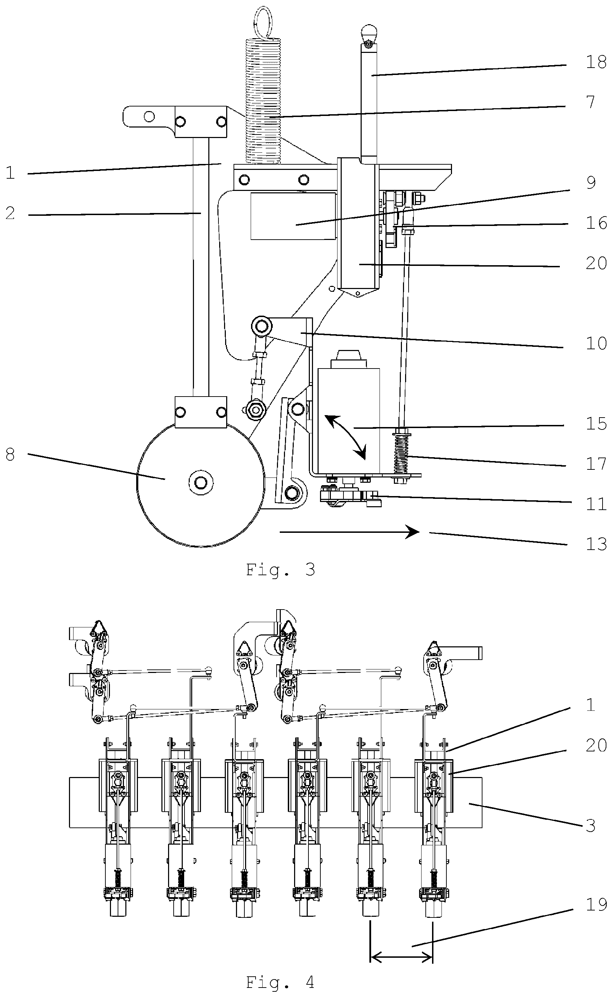

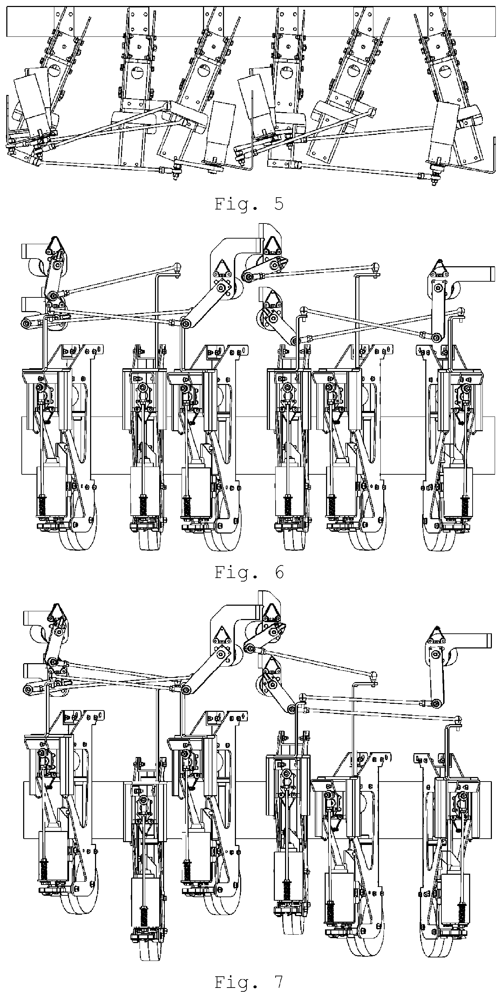

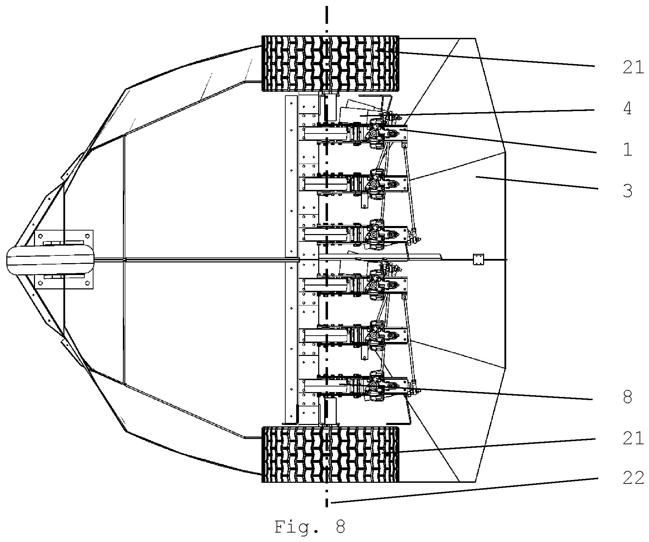

Weitere Merkmale und Vorteile der Erfindung ergeben sich aus der nachfolgenden Beschreibung eines bevorzugten, den Schutzbereich nicht beschränkenden Ausführungsbeispiels der Erfindung unter Bezugnahme auf die angeschlossenen Zeichnungen. Es zeigen Fig. 1 eine perspektivische Ansicht eines Rasenbearbeitungsmoduls zur Unkrautentfernung in Rasen, Fig. 2 eine perspektivische Ansicht eines mit einem derartigen Rasenbearbeitungsmodul versehenen Mobilroboters, Fig. 3 eine Seitenansicht des Rasenbearbeitungsmoduls Vorrichtung ohne Seitenblech, Fig. 4 eine Ansicht von vorne einer Anordnung von sechs Rasenbearbeitungsmodulen in Mittelstellung, Fig. 5 eine Ansicht von oben einer Anordnung von sechs Rasenbearbeitungsmodulen, bei denen die einzelnen Module in unterschiedliche Richtungen geschwenkt sind, Fig. 6 eine Ansicht von vorne der in Fig. 5 gezeigten Anordnung, Fig. 7 eine Ansicht von vorne einer Anordnung von sechs Rasenbearbeitungsmodulen der in Fig. 5 gezeigten

verschwenkten Stellungen in unterschiedlichen vertikalen Positionen, und Fig. 8 eine Ansicht von unten eines mit derartigen Rasenbearbeitungsmodulen versehenen Mobilroboters.

Das Rasenbearbeitungsmodul 1 zur Unkrautentfernung in Rasen ist mit einem Drehschubgelenk 2 mit einem Strukturelement des Hauptkörpers 3 des Mobilroboters verbunden. Das Rasenbearbeitungsmodul wird mittels eines am Strukturelement des Mobilroboters 12 angebrachten Antriebs 4 mit einem Kurbelgetriebe 5 und einer zwischen Kugelgelenken gelagerten Schubstange 6 rechtwinkelig zur Fahrtrichtung 13 des Mobilroboters 12 bewegt. Das Rasenbearbeitungsmodul 1 ist mit einer Feder 7 am Mobilroboter vertikal abgestützt. Ein Laufrad 8 stützt das Rasenbearbeitungsmodul 1 gegen den Boden ab. Eine von einem Motor 9 angetriebene Parallelogrammführung 10 führt ein Werkzeug 11 entlang einer kreisbogenförmigen Trajektorie. Das Bezugszeichen 21 bezeichnet eines der beiden ungelenkten Räder des Fahrwerks.

Während kontinuierlicher Fortbewegung des Mobilroboters 12 in Fahrtrichtung 13 steuert eine am Mobilroboter 12 befindliche Steuervorrichtung basierend auf Bildern einer am Mobilroboter 12 befindlichen digitalen Kamera 14 und einem Algorithmus zur Durchführung einer Objekterkennung das Rasenbearbeitungsmodul 1 im Closed-Loop-Verfahren so rechtwinkelig zur Fahrtrichtung 13, dass sich das Werkzeug 11 im Zuge der weiteren Fortbewegung über das Unkraut bewegt. Gleichzeitig wird das Werkzeug 11 aktiviert, und mittels der von dem Motor 9 mit einer Kurbel 16 angetriebenen Parallelogrammführung 10 von der Steuervorrichtung zeitlich gesteuert so abgesenkt und wieder angehoben, dass sich der tiefste Punkt dieses Bewegungsablaufes an der Stelle des Unkrauts befindet, und so das Unkraut bodennah, knapp über seiner Wurzel abschneidet.

Die bodennahe Schnitthöhe wird mittels des am Boden rollenden Laufrades 8 und dem konstanten Hub der Parallelogrammführung 10 relativ zum Laufrad 8 auch bei unebenem Gelände beibehalten.

Das Rasenbearbeitungsmodul ist mit weichen Federn 7 am Mobilroboter 12 abgestützt, um die Aufstandskraft des Laufrades 8 am Boden und damit dessen Rollwiderstand zu reduzieren und dessen Seitenführungskraft, und damit die bei der Verschwenkung der Vorrichtung auf den Mobilroboter 12 unerwünschte Kräfte quer zur Fahrtrichtung zu reduzieren.

Die von der Parallelogrammführung 10 erwirkte Trajektorie 15 des Werkzeugs 11 relativ zum Rasenbearbeitungsmodul 1 ist nach oben und gegen die Fahrtrichtung entlang einer Bahn eines Kreisbogens gekoppelt, um bei Kollisionen mit dem Boden oder mit am Boden befindlichen Gegenständen das Werkzeug 11 bei kontinuierlicher Fortbewegung des Mobilroboters 12 nach oben abzuheben. Der Hubantrieb ist in Hubrichtung mit Federn 17 mit dem Werkzeug 11 verbunden, um Schäden am Hubantrieb aus solchen Kollisionen zu vermeiden. Der Motor 4, das Kurbelgetriebe 5 und die Schubstange 6 zur Verstellung rechtwinkelig zur Fahrtrichtung 13 sind mit einem federnden Element 18 mit dem Rasenbearbeitungsmodul 1 verbunden, um Schäden am Motor 4 und dem Kurbelgetriebe 5 aus solchen Kollisionen zu vermeiden.

Die Geometrie des Rasenbearbeitungsmoduls 1 erlaubt eine Anordnung mit einem Abstand 19, der kleiner als die Schwenkweite des Werkzeugs 11 um das Drehschubgelenk 2 ist. Damit gelingt eine ununterbrochene Bearbeitbarkeit über die gesamte Breite der eingesetzten Rasenbearbeitungsmodule, unabhängig von deren Anzahl. Dieser modulare Aufbau erlaubt eine Anpassung an eine vorgegebene Flächenleistung und somit eine einfache Skalierbarkeit des Konzepts. Fig. 5 und 6 zeigen eine Anordnung von sechs Rasenbearbeitungsmodulen, bei denen die einzelnen Rasenbearbeitungsmodule 1 in unterschiedliche Richtungen geschwenkt sind. Die beim Verschwenken mehrerer benachbarter Rasenbearbeitungsmodule möglichen Kollisionen zwischen den einzelnen Rasenbearbeitungsmodulen werden von der am Mobilroboter 12 befindlichen Steuervorrichtung dadurch vermieden, dass die Steuerung rechtwinkelig zur Fahrtrichtung 13 Mindestabstände zu den Schwenkpositionen der jeweils benachbarten Rasenbearbeitungsmodule einhält. Darüber hinaus verhindern beidseitige Gleitflächen 20 an den Rasenbearbeitungsmodulen Beschädigungen und Verhaken der Rasenbearbeitungsmodule 1 in einem solchen Kollisionsfall.

Innerhalb der Anordnung erlaubt die Geometrie des Rasenbearbeitungsmoduls eine voneinander unabhängige vertikale Verschiebung einzelner Rasenbearbeitungsmodule 1 im Hubbereich ihrer Drehschubgelenke 2, ohne dass Überschneidungen zwischen den Elementen der Rasenbearbeitungsmodule 1 auftreten, sodass die Rasenbearbeitungsmodule 1 auch bei Bodenunebenheiten unabhängig voneinander mit ihren Laufrollen 8 am Boden entlang laufen und somit den vorgesehenen Bodenabstand einhalten. Fig. 7 zeigt eine Anordnung von sechs Rasenbearbeitungsmodulen 1, bei denen die einzelnen Rasenbearbeitungsmodule 1 in unterschiedliche Richtungen geschwenkt sind, und eine unterschiedliche vertikale Verschiebung aufweisen. In Fig. 8 ist zu erkennen, dass die Rollkörper 8 mit ihren Aufstandspunkten auf einer gemeinsamen Geraden 22 liegen, die sich zwischen den ungelenkten Rädern 21 erstreckt.

## Patentansprüche

1. Vorrichtung zur Pflege von Rasenflächen, umfassend einen Hauptkörper (3) mit einem angetriebenen Fahrwerk zur Fortbewegung auf der Rasenfläche und wenigstens ein Rasenbearbeitungsmodul (1), welches ein motorisch zur Rasenfläche absenkbares Werkzeug (11) aufweist, **dadurch gekennzeichnet, dass** das Rasenbearbeitungsmodul (1) relativ zum Hauptkörper (3) quer zur Fahrtrichtung (13) verlagerbar ist, insbesondere verschwenkbar ist, um das Werkzeug (11) zwischen einer rechten und einer linken Bearbeitungsposition zu verlagern bzw. zu verschwenken, dass bevorzugt das Rasenbearbeitungsmodul (1) in Höhenrichtung relativ zum Hauptkörper verlagerbar am Hauptkörper (3) angeordnet ist und dass ein auf die Rasenfläche ausrichtbarer Sensor (14) und eine Steuervorrichtung vorgesehen sind, wobei vom Sensor (14) erfasste Sensordaten einem in der Steuervorrichtung implementierten Algorithmus zur Durchführung einer Objekterkennung zugeführt sind, sodass die Steuervorrichtung das Werkzeug (11) bei Erkennen eines Objekts, insbesondere von Unkraut, absenkt, um einen Arbeitsschritt am Objekt durchzuführen.

2. Vorrichtung nach Anspruch 1, **dadurch gekennzeichnet, dass** das wenigstens eine Rasenbearbeitungsmodul (1) einen Rollkörper (8) zum Abrollen auf der Rasenfläche aufweist.

3. Vorrichtung nach Anspruch 2, **dadurch gekennzeichnet, dass** der Rollkörper (8) mit seinem Rollkörperaufstandspunkt entlang einer Geraden (22) angeordnet ist, die die Aufstandspunkte zweier ungelenkter Räder (21) des Fahrwerks verbindet.

4. Vorrichtung nach Anspruch 2 oder 3, **dadurch gekennzeichnet, dass** der Rollkörperaufstandspunkt in einer Verschwenkachse angeordnet ist, um die das Rasenbearbeitungsmodul (1) zwischen der rechten und der linken Bearbeitungsposition verlagerbar bzw. verschwenkbar ist.

5. Vorrichtung nach einem der Ansprüche 1 bis 4, **dadurch gekennzeichnet, dass** das wenigstens eine Rasenbearbeitungsmodul (1) zu seiner Verlagerung bzw. Verschwenkung von einem am Hauptkörper (3) angeordneten Antrieb (4) angetrieben ist, wobei bevorzugt der Antrieb (4) über ein Kurbelgetriebe (5) und eine Schubstange (6) mit dem Rasenbearbeitungsmodul (1) zusammenwirkt.

6. Vorrichtung nach Anspruch 5, **dadurch gekennzeichnet, dass** das Rasenbearbeitungsmodul (1) in Verlagerungs- bzw. Schwenkrichtung gefedert mit dem Antrieb (4) verbunden ist, wobei ein Federelement (18) vorzugsweise zwischen dem Rasenbearbeitungsmodul (1) und der Schubstange (6) angeordnet ist.

7. Vorrichtung nach einem der Ansprüche 1 bis 6, **dadurch gekennzeichnet, dass** das Rasenbearbeitungsmodul (1) über ein kombiniertes translatorisches und rotatorisches Gelenk, insbesondere ein Drehschubgelenk, mit dem Hauptkörper (3) verbunden ist.

8. Vorrichtung nach einem der Ansprüche 2 bis 7, **dadurch gekennzeichnet, dass** der Rollkörper (8) quer zu seiner Abrollrichtung mit einem verrundeten Querschnitt ausgebildet ist.

9. Vorrichtung nach einem der Ansprüche 1 bis 8, **dadurch gekennzeichnet, dass** das wenigstens eine Bearbeitungsmodul (1) mittels wenigstens einer Feder (7), bevorzugt mit einstellbarer Vorspannung, vertikal am Hauptkörper abgestützt ist.

10. Vorrichtung nach einem der Ansprüche 1 bis 9, **dadurch gekennzeichnet, dass** ein am Rasenbearbeitungsmodul (1) befestigter Hubantrieb (9) in Hubrichtung gefedert mit dem Werkzeug (11) verbunden ist.

11. Vorrichtung nach einem der Ansprüche 1 bis 10, **dadurch gekennzeichnet, dass** zwei benachbarte Rasenbearbeitungsmodule (1) jeweils in einem seitlichen Abstand voneinander angeordnet sind, der gleich oder kleiner ist als eine durch die rechte und die linke Bearbeitungsposition definierte Bearbeitungsbreite des Rasenbearbeitungsmoduls (1).

12. Vorrichtung nach einem der Ansprüche 1 bis 11, **dadurch gekennzeichnet, dass** die Mehrzahl der Rasenbearbeitungsmodule (1) unabhängig voneinander in Höhenrichtung relativ zum Hauptkörper und quer zur Fahrtrichtung (13) verlagerbar bzw. verschwenkbar sind.

13. Vorrichtung nach einem der Ansprüche 1 bis 12, **dadurch gekennzeichnet, dass** die Steuervorrichtung ausgebildet ist, um den Antrieb (4) zur seitlichen Verlagerung bzw. Verschwenkung des wenigstens einen Rasenbearbeitungsmoduls (1) derart anzusteuern, dass das Werkzeug (11) über ein innerhalb der Bearbeitungsbreite erkanntes Objekt gelangt.

14. Vorrichtung nach einem der Ansprüche 1 bis 13, **dadurch gekennzeichnet, dass** die Steuervorrichtung ausgebildet ist, um einen senkrecht zur Fahrtrichtung (13) gemessenen seitlichen Abstand zwischen einem erkannten Objekt und dem Rasenbearbeitungsmodul (1) oder dem Werkzeug (11) zu erfassen und den Antrieb (4) zur seitlichen Verlagerung bzw. Verschwenkung des wenigstens einen Rasenbearbeitungsmoduls (1) während der Fahrt in einem Closed-Loop-Verfahren derart anzusteuern, dass der Abstand verringert bzw. auf Null reduziert wird.

15. Vorrichtung nach einem der Ansprüche 1 bis 14, **dadurch gekennzeichnet, dass** die Steuervorrichtung ausgebildet ist, um den Antrieb (4) zur seitlichen Verlagerung bzw. Verschwenkung des wenigstens einen Rasenbearbeitungsmoduls (1) und den Hubantrieb (9) zur Absenkung des Werkzeugs (11) derart anzusteuern, dass das Werkzeug (11) ohne Unterbrechung der Fahrt einen Arbeitsschritt am Objekt durchführt.
